# EUROPEAN PATENT APPLICATION

(11) **EP 0 671 239 A1**
(43) Date of publication of application: **13.09.1995**
(21) Application number: 94900999.7
(22) Date of filing: 24.11.1993
(51) Int. Cl.: B23K 26/00, B23K 26/06, B23K 26/08

(54) **LASER MARKING APPARATUS AND METHOD**

(30) Priority: 25.11.1992 JP 336753/92
(71) Applicant: KABUSHIKI KAISHA KOMATSU SEISAKUSHO, Minato-ku Tokyo 107 (JP)
(72) Inventor: CHIBA, Teiichiro, Hiratsuka-shi, Kanagawa 254 (JP); YOSHIDA, Koji, Hiratsuka-shi, Kanagawa 254 (JP)
(74) Representative: Meissner, Peter E., Dipl.-Ing.
(86) International application number: PCT/JP93/01718
(87) International publication number: WO 94/12310

(57) **Abstract**

This invention provides a laser marking apparatus and method which applies laser marking to works as the marking object while they are fed continuously, rather than intermittently, to improve production efficiency. The apparatus includes a laser oscillator (1), a first polarizer (3) for polarizing a laser beam from the laser oscillator (1) to carry out raster scanning, a mask (6) having a predetermined pattern for selectively transmitting the laser beam from the first polarizer (3), and a second polarizer (9) for further polarizing the beam passing through the mask (6) to project the pattern to the surface of the work. The second polarizer (9) has a mirror (10) for reflecting the laser beam passing through the mask (6), and a moveable lens (13) for passing the reflected laser beam and forming the image of the pattern on the work (8), the moveable lens (13) being mounted to a movement mechanism (15). The laser beam is projected while the moveable lens (13) is being moved in synchronism with the work (8) to apply the marking to the work (8).

## Description

### FIELD OF THE INVENTION

The present invention relates to a laser marking apparatus and method for carrying out marking on a plurality of marking objects continuously fed for marking.

### RELATED BACKGROUND ART

An ink jet marking method has hitherto been widely used for marking patterns composed of characters, symbols, diagrams and figures on works such as, for example, metals, synthetic resins, ceramics, paper, and cloths and fabrics which are manufactured in factory lines. This system is intended to carry out marking while changing relative positions of a work and an ink jet nozzle by a transfer unit as disclosed, for example, in Japanese Patent Application Disclosure Gazette SHO. 57-14981, and therefore conjunctive operation of the transfer unit and the ink jet unit is essentially required.

Along with a tendency of down sizing of workpieces such as semiconductor products in recent years, marks to be used have been required to be smaller with higher preciseness. Therefore, a laser marking apparatus has lately been noted instead of the ink jet system. The conventional laser marking apparatus has been such that marking is carried out by raster-scanning a mask surface with a laser beam from a laser oscillator through a polarizer and irradiating the laser beam transmitting through the mask onto a work.

However, in such laser marking apparatus, the laser beam transmitting through the mask is polarized toward a work transfer line, a work is temporarily stopped when it reaches a laser irradiation area, which is fixed, and marking is carried out by irradiating the laser beam onto the surface of this stationary work. Therefore this system includes a problem that the transfer line should be stopped for marking on each work and improvement of the production tact time will be impaired.

### DISCLOSURE OF THE INVENTION

An object of the present invention made in view of the above problem is to provide a laser marking apparatus and method for carrying out marking on marking objects which are continuously fed in laser beam marking and improving production efficiency.

The present invention is intended to provide a laser marking apparatus comprising a first polarizer for polarizing a laser beam from a laser oscillator for raster scanning, a mask capable of displaying a specified pattern through which a raster scanning laser beam from the first polarizer is selected and transmitted, and a second polarizer for further polarizing the raster scanning beam which has transmitted through the mask to irradiate the laser beam onto the mask for marking the pattern onto the object, wherein the second polarizer is provided with a reflection mirror which reflects the laser beam transmitting through the mask and a movable lens which receives the reflection laser beam and irradiates the laser beam for marking and the movable lens is mounted on a moving mechanism which moves synchronized with a work transfer speed. The reflection mirror comprises a first mirror which directly reflects the laser beam passing through the mask and a second mirror which reflects the above reflected beam to the movable lens, and the direction of reflection of the first mirror is changed over to one of the second mirror or the movable lens. This reflection mirror can comprise a moving mirror which directly reflects the laser beam passing through the mask and is movable on a flat surface, a rotary mirror which reflects the reflection beam to the movable lens and is rotatable on a flat surface and a fixed mirror which receives the reflection beam along with movement of the moving mirror and is able to reflect the reflection beam to the rotary mirror, and the direction of reflection of the reflection mirror can be changed over to the rotary mirror or the fixed mirror in accordance with the position of the moving mirror. In addition, the moving mechanism which mounts the movable lens is formed by an orthogonal two axis plane moving mechanism one axial direction of which is aligned with the work transfer direction and drive means for this axial direction drives the moving mechanism synchronized with the work transfer speed.

In a laser marking method for further polarizing the raster-scanned laser beam which has passed through the mask by the second polarizer and irradiating the polarized laser beam onto a work surface in accordance with the marking pattern after raster-scanning the laser beam from the laser oscillator through the first polarizer and irradiating the raster-scanned laser beam onto a mask capable of displaying a specified pattern whereby the laser beam is selected and transmitted therethrough, the laser beam is irradiated onto the work while the movable lens of the second polarizer comprising the reflection mirror and the movable lens is moved synchronized with the work transfer speed in the work transfer direction. The reflected laser beam from the reflection mirror is changed over to one of the fixed mirror and the movable lens and irradiated thereto by operating the movable mirror of the reflection mirror comprising the movable mirror and the fixed mirror, and the pattern is thus rotated.

A configuration as described above enables mores flexible plane positioning of the mask information obtained from the first polarizer by the second polarizer and movement of the movable lens synchronized with the work without any change at the work transfer unit side. With this, the laser marking apparatus can be more flexible in its operation and a load on the transfer unit can be relieved and therefore the versatility is further raised and production efficiency can be improved by carrying out laser marking even in continuous feeding condition.

### BRIEF DESCRIPTION OF THE DRAWINGS

Fig. 1 is a configuration diagram of a laser marking apparatus according to a first embodiment of the present invention;
Fig. 2 is an operation flow chart of the apparatus shown in Fig. 1;
Figs. 3A and 3B are respectively an illustration of a first polarizing mirror of a second polarizer which is directly polarized to a movable lens;
Figs. 4A and 4B are respectively an illustration of a first polarizing mirror of a second polarizer which is directly polarized to a movable lens through a second polarizing mirror;
Fig. 5 is an illustration of the beginning state of marking;
Fig. 6 is an illustration of a state of the movable lens synchronized with the transfer unit;
Fig. 7 is an illustration of the end of marking; and
Fig. 8 is a plan view of a reflection mirror of the second polarizer according to the second embodiment.

### BEST MODE FOR CARRYING OUT THE INVENTION

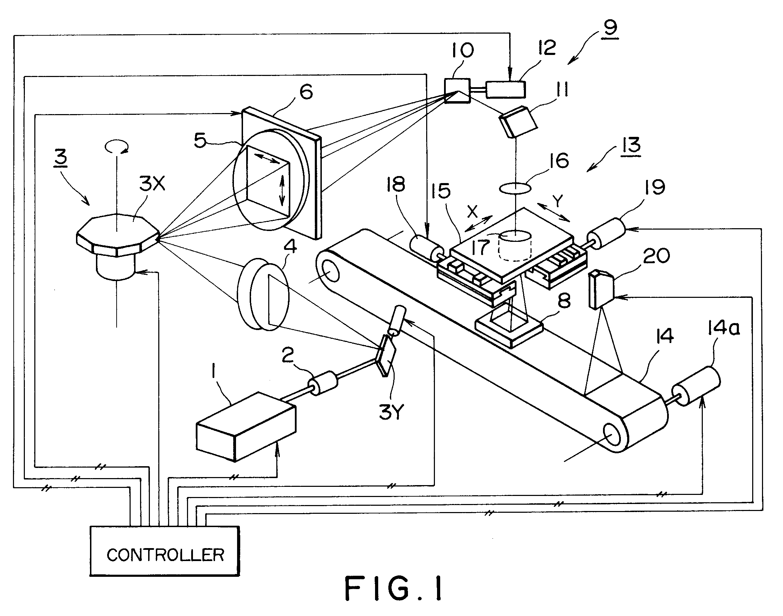

A first embodiment according to the present invention is described in detail below referring to Figs. 1 to 7.

A laser marking apparatus of this embodiment is provided with a YAG laser oscillator 1 serving as a laser beam source as shown in Fig. 1 and a first polarizer 3 which condenses a laser beam from the YAG oscillator 1 through an optical lens 2, then polarizes the laser beam in X and Y directions and raster-scans the laser beam. An optical system 4 which condenses the laser beam reflected from a Y-direction polarizer to one point on the polarizing plane of an X-direction polarizer of the first polarizer 3 is arranged at an intermediate part of the first polarizer 3.

The first polarizer 3 comprises a polygon mirror 3X which is the X-direction polarizer and a rotary mirror 3Y which is the Y-direction polarizer, which respectively have the rotation axes which orthogonally intersect and are arranged with the optical system 4 disposed therebetween. The polygon mirror 3X is a 36-face hedron and rotated in several fixed speed rotation modes an optimum mode of which is selected for each work. In other words, one face of the polygon mirror 3X corresponds to one line in the X direction on the liquid crystal mask described later and one rotation of the polygon mirror 3X corresponds to 36 lines in the X direction. On the other hand, a rotary mirror 3Y is adapted to stop after it rotates as much as a small polarizing angle while a laser beam receiving point is changed from one face to the next face as the polygon mirror 3X rotates. The rotary mirror 3Y operates at 43 small polarizing angles. The rotary mirror 3Y reversely rotates to return at once from the final 43rd face to the first face. Though the 22nd face can be set as a neutral position, the first face is set as the neutral position, in this embodiment, in accordance with the raster scanning start position. In other words, one small polarizing angle of the rotary mirror 3Y corresponds to line spacing in the Y direction on the liquid crystal mask and is rotated by one small polarizing angle each time the one face of the polygon mirror 3X is finished and stays at that position until one face of the polygon mirror 3X is finished.

In addition, a liquid crystal mask 6 which receives the laser beam which is raster-scanned by the first polarizer 3 and can display a pattern for electrically passing or scattering the received laser beam is provided and a desired marking pattern can thus be formed. The liquid crystal mask 6 is a so-called transmission dispersion type liquid crystal mask and, for example, "Liquid Crystal Resin Composite Comprising a Liquid Crystal and a resin" in Japanese Patent Application Disclosure Gazette HEI. 2-96714 corresponds to this liquid crystal mask. This liquid crystal mask 6 is provided with a number of parallel electrode lines which intersect one another respectively on the obverse surface and the rear surface of the mask whereby the laser beam scatters in the liquid crystal to which no voltage is applied and passes through the liquid crystal to which the voltage is applied. Using such electrical characteristics as described above, a desired marking pattern is instantaneously imaged by selectively applying a voltage to the electrodes. Differing from the conventional liquid crystal mask, this liquid crystal mask 6 does not require a polarizing plate. Consequently, an intensity of the laser beam which passes through the liquid crystal mask is more than two times the conventional. In this embodiment, split pattern for this liquid crystal mask 6 are displayed with a dot matrix comprising 24 dots respectively in vertical and horizontal axes. This liquid crystal mask 6 is available in various types of dot matrixes including 72 dots × 36 dots.

A second polarizer 9 for polarizing the laser beam which passes through the mask in accordance with a marking pattern toward the surface of a marking work 8 is provided at the outlet side of the liquid crystal mask 6. The second polarizer 9 has a first polarizing mirror 10 which directly reflects the laser beam which passes through the liquid crystal mask 6 and a second polarizing mirror 11 which reflects the reflection beam from the first polarizing mirror 10 toward a movable lens 13 described later. In this case, the first polarizing mirror 10 is adapted to change over the direction of reflection for the movable lens 13 directly, or indirectly through the second polarizing mirror 11. In other words, the first polarizing mirror can be rotated by a mirror drive motor 12 and the second polarizing mirror 11 i fixed with its polarizing direction faced to the movable lens 13.

The movable lens 13 which receives the polarized laser beam directly from the first polarizing mirror 10 or indirectly through the second polarizing mirror 11 as described above is arranged above a belt conveyor type transfer unit 14 by which a work 8 to be marked is transferred. The movable lens 13 comprises an objective lens 16 which moves integral with an XY table 15 and a marking lens 17 which is fixed in a through part of the XY table 15 so that the optical axis is aligned with this objective lens 16 and carries out pattern marking on the work 8 passing through under the XY table 15. The objective lens 16 receives the laser beam from the second polarizing mirror 11 to compensate distortion of an image. The XY table 15 is provided with a Y-direction drive motor 18 for driving the objective lens 16 to be aligned with the transfer direction of the work 8 and an X-direction drive motor 19 for driving the objective lens in a direction at right angles to movement of the Y-direction drive motor. The XY table 15 is moved in a plane in a resultant drive direction by these X-direction and Y-direction drive motors 18 and 19.

On the other hand, a work position detector 20 for detecting the work 8 is provided at an upstream side of the work transfer unit 14. And a controller 21 which totally controls all drive units described above is provided. This controller 21 generates marking pattern signals to form a laser beam transmitting image corresponding to the pattern on the liquid crystal mask 6 and drives the first polarizer 3 to raster-scan the laser beam on such liquid crystal mask 6. For setting the marking direction of the pattern on the surface of work 8, the polarizing direction of the first polarizing mirror 10 in the second polarizer 9 is determined and the mirror drive motor 12 is driven according to this polarizing direction. A signal from the work detector 20 is entered, the Y-direction drive motor 18 is started so that synchronized movement of the work 8 is carried out along the transfer direction when the work 8 on the transfer unit 14 reaches the marking position and laser marking is carried out while the work 8 is being transferred.

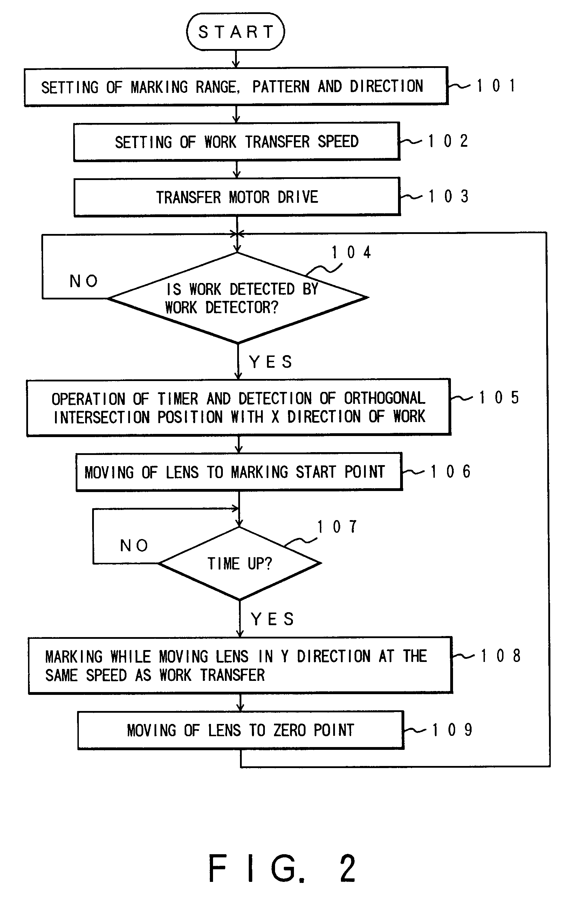

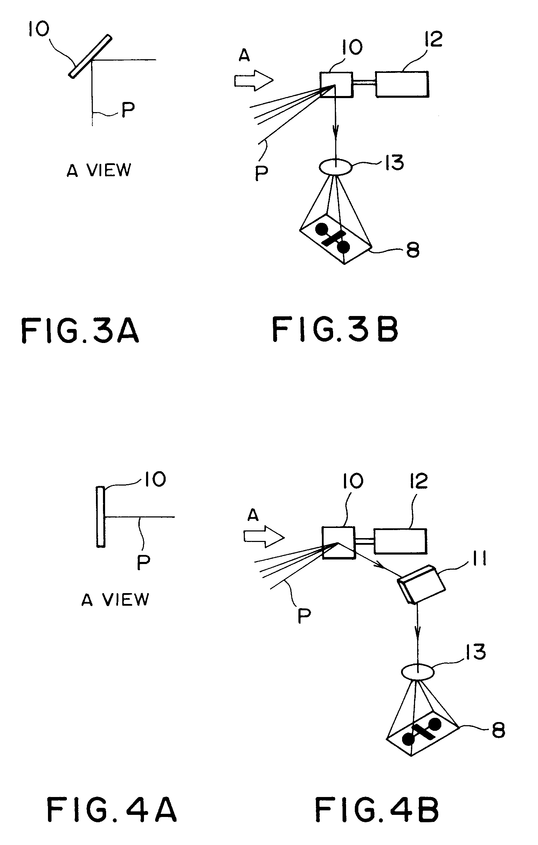

An operation flow chart based on the controller 21 is shown in Fig. 2. First of all, the marking pattern, marking range and marking direction on the work 8 are set (step 101). As regards the marking direction, if the polarizing direction is set to the movable lens 13 by slanting the first polarizing mirror 10 by the mirror drive motor 12 as shown in Figs. 3A and 3B, the laser beam P is polarized in a direction normal to the work 8. As a result, the pattern shown is marked on the surface of the work 8. When the first polarizing mirror 10 is vertically set by the mirror drive motor 12 as shown in Figs. 4A and 4B, the laser beam p is polarized to be introduced into the second polarizing mirror 11 which is fixed in a direction parallel to the work 8. The second polarizing mirror 11 is directed to the movable lens 13 thereunder and the laser beam P is polarized in a direction normal to the work 8. As a result, a pattern in a direction relatively rotated by 90 degrees in reference to the pattern shown in Fig. 3B is marked on the surface of work 8. In other words, the direction of the marking pattern can be selected as required only by controlling the mirror drive motor 12 after moving the work 8 right below the first polarizing mirror 10 or the second polarizing mirror 11 by the transfer unit 14.

Next, a transfer speed of the work 8 is set (step 102). Since the available range of marking by the laser marking apparatus is limited, it is necessary to conduct marking of one pattern in this limited range. Therefore, the transfer sped of the work 8 is determined in accordance with the size of the marking range and the direction.

After such preparatory operation, the drive motor 14a for driving the transfer unit 14 is started (step 103) and the presence of the work 8 is detected by the work position detector 20 installed on the transfer unit 14 to check a timing when the work 8 is fed into the marking range (step 104). In a case the presence of the work 8 is detected, the timer in the controller 21 is started and a direction which orthogonally intersects the feeding direction of the work 8 is detected by the work position detector 20 (step 105). Then the movable lens 13 is moved to the marking start point by operating the XY table 15 (step 106). This marking start point is an stroke end of the feeding direction for the work 8 to the upstream side for transfer in the available range of marking of the marking apparatus and a position orthogonally intersecting the feed direction of the work 8.

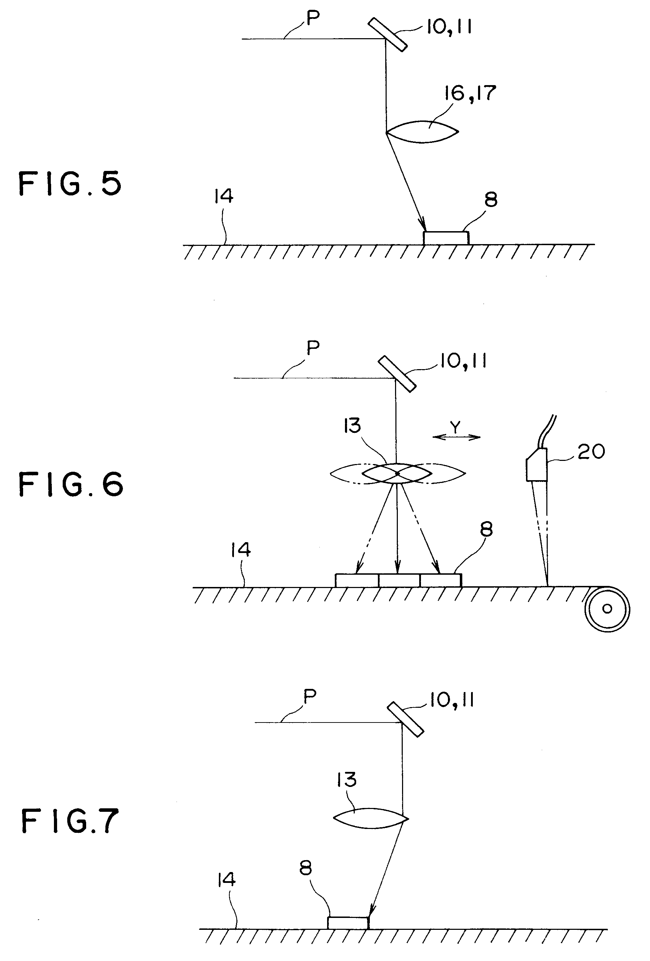

A period until the work 8 is fed to this marking start point after the movable lens 13 has been moved to the marking start point remains in a waiting state (step 107). This waiting time is uniformly determined according to a distance from the work position detector 20 to the available range of marking and the transfer speed. Marking is started when the work 8 reaches the marking start point (step 108). A fixed pattern is marked on the surface of work 8 by relatively synchronizing and moving the marking position while maintaining the transfer speed of the work 8 at a fixed value as shown in Fig. 5. Synchronization of the marking position is carried out by the Y-direction drive motor 18 of the XY table 15 to maintain the moving speed of the movable lens 13 and the transfer speed of the work 8 to be equal as shown in Fig. 6. The fixed pattern is marked by this synchronized movement and the marking operation on one work is thus finished as shown in Fig. 7.

After completion of marking on one work 8, the movable lens 13 is moved to the upstream side of transfer (step 109) for works 8 which will be fed in sequence, and the operation returns to step 104 to repeat the same operation. Thus, continuous laser marking can be carried out without stopping the transfer of the works 8.

This embodiment enables to implement laser marking of a desired pattern on the surface of work 8 being fed by an action of the second polarizer 9 and particularly selective marking at desired parallel positions in two directions of rotation. Particularly, it is satisfactory for the transfer unit 14 to have only at least one freedom in the feeding direction and therefore marking can be carried out while continuously operating the transfer unit 14. Accordingly, the load on the transfer unit 14 is eliminated to increase the versatility and the work manufacturing tact time is reduced to improve the production efficiency.

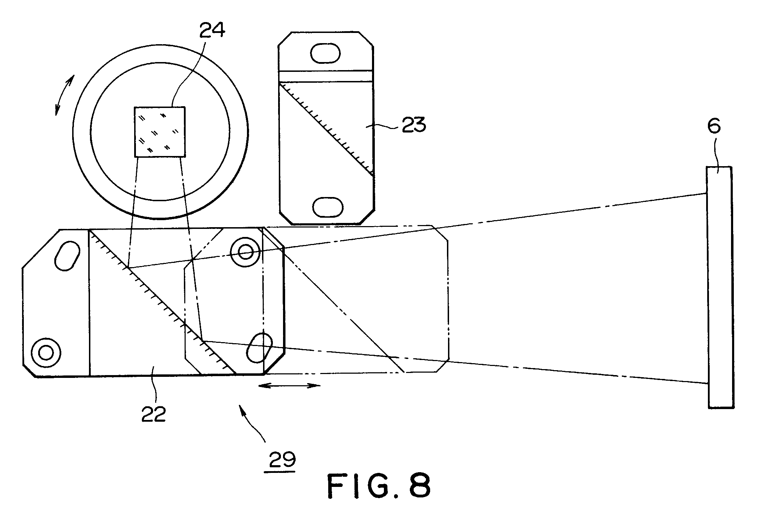

A configuration of the reflection mirror in the second polarizer 29 is described as a second embodiment, referring to Fig. 8.

The second polarizer 29 comprises movable mirror 22, a fixed mirror 23 and a rotary mirror 24. The movable mirror 22 which directly reflects the laser beam which has passed through the liquid crystal mask 6 is installed so that the distance from the liquid crystal mask 6 is variable. The fixed mirror 23 and the rotary mirror 24 are arranged in parallel to the moving direction of the movable mirror 22. The movable mirror 22 is adapted to be positioned at the first position where the reflecting direction is faced to the fixed mirror 23 and at the second position where the reflecting direction is faced to the rotary mirror 24. The rotary mirror 24 is adapted to be rotatable in a plane at the center of the reflection surface so that the beam receiving direction can be faced to the movable mirror 22 or the fixed mirror 23 by rotating in plane to 90 degrees. The rotary mirror 24 reflects the laser beam received directly from the movable mirror 22 or indirectly through the fixed mirror 23 to the movable lens 13 (in a direction orthogonally intersecting the paper surface in the diagram). The fixed mirror 23 is fixed so that the direction of reflection is faced to the rotary mirror 24 and, when the fixed mirror 23 receives the laser beam along with movement of the movable mirror 13, the laser beam is reflected to the rotary mirror 24. Thus, the reflecting direction is changed over to the rotary mirror 24 or the fixed mirror 23 in accordance with a varying position of the movable mirror 22 and laser marking of the specified pattern is carried out by rotating the pattern to 90 degrees in the plane.

### INDUSTRIAL APPLICABILITY

The present invention is useful as a laser marking apparatus and method which permit laser marking on marking works which are continuously fed without stopping the feeding of the works and further improvement of production efficiency.

## Claims

1. A laser marking apparatus comprising a laser oscillator; a first polarizer for polarizing a laser beam from said laser oscillator and raster-scanning said laser beam; a mask capable of displaying a specified pattern which selects the laser beam to be raster-scanned by said first polarizer and admits said laser beam to pass therethrough; and a second polarizer for further polarizing said raster-scanned laser beam which has passed through said mask and irradiating said pattern on a surface of a work for marking, said second polarizer being provided with a reflection mirror for reflecting said laser beam which has passed through said mask and a movable lens for receiving the laser beam from said reflection mirror and irradiating the laser beam onto the work for marking, said movable lens being mounted on a moving mechanism which is moved synchronized with a work transfer speed.

2. A laser marking apparatus according to Claim 1, wherein said reflection mirror comprises a first mirror for directly reflecting the laser beam which has passed through the mask and a second mirror for reflecting a reflection laser beam from said first mirror to said movable lens, said first mirror being adapted so that a direction of reflection can be changed over to said second mirror or said movable lens.

3. A laser marking apparatus according to Claim 1, wherein said reflection mirror comprises a movable mirror which directly reflects the laser beam which has passed through the mask and is movable in a plane, a rotary mirror which reflects the reflection laser beam from said movable mirror to said movable lens and is rotatable in the plane, and a fixed mirror which receives the reflection laser beam along with movement of the position of the movable mirror and can reflect the laser beam to said rotary mirror, said direction of reflection being adapted to be selectable to the rotary mirror or the fixed mirror in accordance with movement of the position of the movable mirror.

4. A laser marking apparatus according to Claim 1, wherein a moving mechanism which mounts said movable lens is formed by an orthogonal 2-plane moving mechanism and one axial direction thereof is aligned with a work feeding direction and drive means for this axial direction is enabled to perform driving synchronized with the work feeding speed.

5. A laser marking method for raster-scanning a laser beam from a laser oscillator through a first polarizer, irradiating said laser beam onto a mask capable of displaying a specified pattern to select and pass the laser beam through said mask, further polarizing said raster-scanned laser beam, which has passed through the mask, by a second polarizer and irradiating the laser beam onto a work surface according to said pattern for marking, wherein marking is carried out by irradiating the laser beam onto the work while moving said movable lens of said second polarizer comprising the reflection mirror and the movable lens synchronized with the work feeding direction.

6. A laser marking method according to Claim 5, wherein a reflection laser beam of a movable mirror of said reflection mirror comprising a movable mirror and a fixed mirror is changed over to said fixed mirror or said movable lens for irradiation by operating said movable mirror and said marking pattern is rotated.
